# EUROPEAN PATENT SPECIFICATION

(11) **EP 4 223 609 B1**
(45) Date of publication and mention of the grant of the patent: **20.08.2025**
(21) Application number: 23169195.7
(22) Date of filing: 27.06.2017
(51) Int. Cl.: B61D 17/22, F16B 5/02, F16B 37/06, F16B 19/02

(54) **A MOUNTING ELEMENT, A CAR INTERFACE SECTION, AN ASSEMBLY OF A CAR INTERFACE SECTION AND A GANGWAY INTERFACE SECTION AND A METHOD OF MOUNTING**
MONTAGEELEMENT, FAHRZEUGSCHNITTSTELLENABSCHNITT, ANORDNUNG EINES FAHRZEUGSCHNITTSTELLENABSCHNITTS UND EINES GANGWAY-SCHNITTSTELLENABSCHNITTS SOWIE VERFAHREN ZUR MONTAGE
ÉLÉMENT DE MONTAGE, SECTION D'INTERFACE DE VOITURE, ENSEMBLE D'UNE SECTION D'INTERFACE DE VOITURE ET SECTION D'INTERFACE DE PASSERELLE ET PROCÉDÉ DE MONTAGE

(30) Priority: 29.06.2016 GB 201611240
(43) Date of publication of application: 09.08.2023
(62) Divisional of application: 17733447.1
(73) Proprietor: Bombardier Transportation GmbH, 10785 Berlin (DE)
(72) Inventor: Kennell, James, Belper, DE56 2TH (GB)
(74) Representative: Ramrath, Lukas

(56) References cited:
- GB-A- 2 515 422
- JP-A- 2006 056 435
- US-A1- 2007 065 249
- US-A1- 2007 258 791

## Description

The invention relates to a mounting element for mounting a gangway interface section of a rail vehicle to a car interface section of the rail vehicle, a car interface section, an assembly of a car interface section and a gangway interface section and a method of mounting a gangway interface section of a rail vehicle to a car interface section of the rail vehicle.

A rail vehicle can comprise several railway wagons, wherein each railway wagon can have a car body (wagon body). Two railway wagons can be connected by means of a gangway section, wherein the gangway section can e.g. comprise a bellow. For mounting purposes, a car body can have a car interface section and the gangway section can have a gangway interface section. The gangway interface section can be mounted to the car interface section in order to mount the gangway section to the car body.

The gangway section is usually provided with an environmental seal which is compressed between the end frame of the bellow and the car interface section when the bellow is attached to the car body. This seal is normally a conformable rubber seal that is designed and supplied by a gangway supplier.

It is extremely important that the flatness tolerance of the car interface section is agreed with the supplier and then produced within the certain tolerances.

The bellow end frame, i.e. the gangway interface section, is normally bolted on to the end of the car body, i.e. to the car interface section. Thus, the car interface section has to be provided with threaded holes very accurately positioned to match the hole positions in the gangway interface section.

Further, individual components of the car interface section are usually drilled before welding these individual components making accurate positioning very difficult due to weld shrinkage.

The gangway interface section bolt holes are usually provided with clearance that will accommodate a small amount of positional tolerance.

Rivet nuts have been commonly used to provide the threaded hole in the car interface section. However these can be problematic if the hole diameter is not accurate or if the rivet nut is not correctly fitted. This can cause loose or spinning nuts. Rivet nuts are usually fixed solidly with no float making positional tolerances very important. Errors in position or spinning nuts will lead to delays in production and rectification costs.

It is highly desirable that the gangway floor in the gangway interface section is designed to be flush with the walking floor in the car interface section. Again, build tolerances and weld shrinkage can make this flush requirement very difficult to achieve.

JP 2006 056 435 A forms the basis for the preamble of claim 1 and discloses a mounting structure for a railway vehicle exterior cauldron which covers a connecting portion connecting car bodies in a high-speed railway car such as a bullet train line.

It is an object of the present invention to provide a mounting element for mounting a gangway interface section of a rail vehicle to a car interface section of the rail vehicle, a car interface section of the rail vehicle, an assembly of a gangway interface section and a car interface section and a method of mounting a gangway interface section of a rail vehicle to a car interface section of the rail vehicle which allow a fast, uncomplicated and precise mounting of the gangway interface section to the car interface section.

The solution is provided by the subject-matter with the features of claim 1, 11, 12 and 14. Further advantageous embodiments are provided by the subject-matter with the features of the sub claims.

It is a basic idea of the invention to use a mounting element for mounting a gangway section of a rail vehicle to a car body section of the rail vehicle which provides at least a part of a fixation means for fixing the gangway interface section to the car interface section, wherein a mounting position of the mounting element relative to the car interface section can be adjusted, wherein the gangway interface section is aligned with the car interface section in a desired way if mounted to the mounting element in said mounting position of the mounting element.

A mounting element for mounting a gangway interface section of a rail vehicle to a car interface section of the rail vehicle is proposed. The gangway interface section can denote a section of the gangway of a rail vehicle, e.g. an end section, which is mounted to the car interface section in order to mount the gangway section to a car body, e.g. a car body of a wagon. The gangway section can comprise a bellow.

The gangway interface section and the car interface section can both have a mounting section. A mounting section can have or provide a mounting surface, wherein the mounting surfaces of the interface sections abut in a mounted state.

The mounting section of the gangway interface section can have or provide at least one fixation through hole. A diameter of the fixation through hole can be in the range of 10 mm to 15 mm, preferably equal to 13 mm.

Further, the mounting section of the gangway interface section can have or provide at least one positioning through hole. A diameter of the positioning through hole can be in the range of 15 mm to 25 mm, preferably equal to 20 mm.

The mounting section of the car interface section can have or provide at least one fixation through hole and at least one positioning through hole. A diameter of the positioning through hole can be smaller than the diameter of the positioning through hole of the gangway interface section. In particular, a diameter can be in the range of 10 mm to 15 mm, preferably equal to 12.4 mm. A diameter of the fixation through hole can be larger than the diameter of the fixation through hole of the gangway interface section. In particular, a diameter can be in the range of 10 mm to 20 mm, preferably equal to 15.4 mm.

It is desirable to mount the gangway interface section to the car interface section in a desired relative position, in particular such that a floor section of the gangway section and a floor section of the car body section are flush or a step between said floor sections is smaller than a predetermined tolerance value, e.g. smaller than 6.2 mm.

The desired relative position can be provided if the fixation through holes of the interfaces are at least partially aligned. Further, the desired relative position can be provided if the positioning through holes of the interface are at least partially aligned.

A partial alignment can be provided if the through holes overlap at least partially in a common plane of projection, wherein the plane of projection is oriented orthogonal to a centre line of a through hole. The through holes are fully aligned if centre lines of the through holes overlap.

Further, the mounting element comprises at least one positioning thread hole and at least one fixation thread hole.

The positioning thread hole provides a part of a fixation means for mounting the mounting element to the car interface section, in particular to a rear side of a mounting section providing the mounting surface as a front side. It is e.g. possible to mount the mounting element to the car interface section by means of at least one positioning bolt, wherein the positioning bolt extends through the positioning through hole of the car interface section into the positioning thread hole of the mounting element. It is, of course, possible to use a washer which is arranged between a positioning bolt head and the positioning through hole for mounting. It is further possible that the car interface section has a hollow or undercut section, wherein a front surface of the section provides the mounting surface for the gangway interface section and the rear surface provides a mounting surface for the mounting element.

The fixation thread hole provides a part of a fixation means for mounting the gangway interface section to the car interface section. It is possible to mount the gangway interface section to the car interface section by means of at least one fixation bolt, wherein the fixation bolt extends through the fixation through hole of the gangway interface section and the fixation through hole of the car interface section into the fixation thread hole of the mounting element. It is, of course, possible to use a washer which is arranged between a fixation bolt head and the fixation through hole of the gangway interface section for mounting.

It is possible that the gangway interface section has a hollow or undercut section, wherein a front surface of the section provides the mounting surface and the rear surface provides a mounting surface for the bolt heads of the positioning and/or fixation bolt(s).

A mounting position of the mounting element relative to the car interface section is variable and thus adjustable as the positioning through hole of the car interface section allows mounting in all positions of a predetermined position range. Preferably, the mounting element is arranged and mounted in a mounting position such that the at least one fixation thread hole of the mounting element is arranged in a gangway mounting position. In the gangway mounting position of the mounting element, the gangway interface section, if mounted to the car interface section by means of the fixation thread hole of the mounting element, is arranged in the aforementioned desired relative position.

In other words, the mounting element is mounted to the car interface section before mounting the gangway interface section to the car interface section, wherein the mounting position of the mounting element relative to the car interface section allows mounting the gangway interface section to the car interface section in a desired relative mounting position, e.g. such that floor sections are flush or substantially flush.

The mounting element can be made of steel.

Moreover, a fixation thread hole of the mounting element can be provided by a threaded element which is mounted to a body of the mounting element. The threaded element can e.g. be made of steel. The threaded element can be welded to the body of the mounting element. A thickness of the threaded element can be larger than a thickness of the body of the mounting element. In other words, the fixation thread hole is provided by a reinforced section of the mounting element.

The proposed mounting element advantageously allows a fast and precise mounting of the gangway interface section to the car interface section. In particular, the total amount of float between the car interface section and the gangway interface section provided by the inventive solution allows compensating for potential build tolerances, e.g. build tolerances of up to 6.2 mm.

In particular, the design of the installation of the mounting elements can allow a float of up to +/- 3.7 mm between the mounting element and the car interface section. The design of the gangway interface section can allow a float of up to +/- 2.5 mm between the mounting element and the gangway interface section.

In another embodiment, the mounting element is a bar element. In this case, the mounting element can also be referred to as tapping bar. A length of the bar element can be larger than a width of the bar element. A length can be in the range of 500 mm to 1500 mm, preferably in the range of 950 mm to 1050 mm. A width can be in the range of 10 mm to 50 mm, preferably in the range of 20 mm to 40 mm, more preferably equal to 30 mm.

A bar element preferably allows providing multiple fixation thread-holes and multiple position thread-holes.

In another embodiment, the mounting element comprises a first set of at least two positioning thread holes and a second set of at least two fixation thread hole. Preferably, a mounting element comprises three fixation thread-holes and two positioning thread-holes. Multiple fixation thread-holes can be arranged along a common straight line. Multiple positioning thread-holes can be arranged along a common straight line. It is further possible that fixation thread-holes and positioning thread-holes are arranged along a common straight line.

Providing multiple thread holes preferably allow a stable mounting of the mounting element to the car interface section and of the gangway interface section to the car interface section.

In another embodiment, the mounting element comprises at least one recess. The recess can e.g. be provided by a further through hole. The recess advantageously allows saving weight of the mounting element.

In a preferred embodiment, a thread diameter of the at least one fixation thread hole is larger than a thread diameter of the at least one positioning thread-hole. In particular, a thread diameter of the positioning thread hole can be equal to a thread diameter of a M5 thread according to DIN 13, part 1, issue 11.1999. Further, a thread diameter of the fixation thread hole can be equal to a thread diameter of a M8 thread according to DIN 13, part 1, issue 11.1999.

This advantageously allows a weight and space saving design of the mounting element which nevertheless allows a stable mounting to the car interface section and of the gangway interface section.

In another embodiment, a thickness of the mounting element in a section comprising a fixation thread hole is larger than a thickness in a section comprising a positioning thread hole. It is e.g. possible that a thickness of a body of the mounting element is smaller than a thickness of a thread element providing a fixation thread hole.

A thickness of the mounting element in a section comprising a fixation thread hole can e.g. be in the range of 5 mm to 15 mm, preferably equal 11 mm. A thickness of the mounting element in a section comprising a positioning thread hole can e.g. be in the range of 2 mm to 6 mm, preferably equal 4 mm.

The increased thickness provides a reinforced section of the mounting element which, in turn, allows a stable mounting of the gangway interface section to the car interface section by means of the mounting element.

According to the invention, the mounting element comprises a positioning bolt and an adjustment element, wherein the adjustment element is arranged between the bolt head and a free end of the positioning bolt. A free end of the positioning bolt is arranged in the thread section of the positioning thread. The adjustment element can be part of the positioning bolt or be provided by a separate element. A maximal diameter of the adjustment element can be in the range of 10 mm to 20 mm, preferably equal to 15 mm. The maximal diameter of the adjustment element can be larger than the maximal diameter of the positioning bolt, e.g. of the bolt head of the positioning bolt.

Further, the maximal diameter can be smaller than the diameter of the positioning through hole of the gangway interface section but larger than the diameter of the positioning through hole of the car interface section. A length (or thickness) of the adjustment element can be in the range of 15 mm to 25 mm, preferably equal to 20 mm. The adjustment element can have a tapered end section. In particular, a diameter of the adjustment element can decrease towards the bolt head end of the positioning bolt. The positioning bolt can e.g. be provided by a M5 cap head screw.

The positioning bolt can extend through the adjustment element. It is possible that the adjustment element comprises a through hole through which the positioning bolt extends. The adjustment element or at least a portion of the adjustment element can be conically shaped. It is, for instance possible, that the adjustment element or an end portion of the adjustment element is conically shaped, wherein the adjustment element tapers towards the bolt head of the positioning bolt. The adjustment element can also provide a washer, in particular a spacing washer.

The adjustment element provides an alignment element or guide pin when positioning the gangway interface section on the car interface section before mounting by means of the fixation bolt is conducted. The adjustment element can also be denoted as guiding support. In particular, the positioning bolt with the adjustment element can extend from the mounting element through the positioning through hole of the car interface section. Thus, a coarse adjustment of the relative position between the gangway interface section and the car interface section is possible if the gangway interface section is arranged such that the positioning bolt with the adjustment element extends through the positioning through hole of the gangway interface section. It is further possible that the gangway interface section, in particular a side wall section of a positioning through hole, is put or laid on an outer surface of the adjustment element during the coarse alignment.

Thus, a coarse adjustment of the relative position is simplified. The coarse adjustment can provide a first step of positioning the gangway interface section relative to the car interface section before mounting by means of the fixation bolt is conducted. In a second step, a fine adjustment can be made, wherein an initial relative position of the fine adjustment is provided by the described coarse adjustment. It is, however, also possible that a desired relative arrangement of the gangway interface section and the car interface section is provided if the gangway interface section, in particular a side wall section of (a) positioning through hole(s), is put or laid on an outer surface of (a) adjustment element(s). In this case, no fine adjustment needs to be performed.

After coarse adjustment, the gangway interface section can be arranged such that at least one, preferably all, fixation through hole(s) of the gangway interface section are at least partially aligned with (a) fixation through hole(s) of the car interface section and (a) fixation thread hole(s) of the mounting element. In this case, the gangway interface section can be mounted to the car interface section by (a) fixation bolt(s) which extend(s) through the fixation through holes into the fixation thread hole(s). Before mounting, however, an additional fine adjustment can be performed.

In other words, a position of the at least one adjustment element can define a desired gangway mounting position. By means of the adjustment element, the gangway interface section can advantageously be brought into a desired final relative position between the gangway interface section and the car interface section or a position close to the desired final position. Thus, mounting can be performed without any or with only minor additional adjustments after the gangway interface section is guided along the adjustment element(s).

In another embodiment, at least a portion of the adjustment element is conically shaped. This and corresponding advantages have been explained before.

In another embodiment, at least one free end of the mounting element is curved. This advantageously simplifies positioning of the mounting element relative to the car interface section, e.g. the mounting section, in particular if the mounting element is arranged in a hollow or undercut section which is not easily accessible.

Further proposed is a car interface section of a rail vehicle. The car interface section can denote a section of a car body, in particular an end section, of the rail vehicle. Further, the car interface section can be preassembled.

A mounting section of the car interface section for mounting a gangway interface section of the rail vehicle has or provides at least a positioning through hole and at least one fixation through hole. This has been explained before. Further, the car interface section comprises at least one mounting element according to the invention.

Further, the mounting element is mounted to the car interface section such that the at least one positioning threaded hole of the mounting element is at least partially aligned with the at least one positioning through hole of the car interface section and such that the at least one fixation threaded hole of the mounting element is at least partially aligned with the at least one fixation through hole of the car interface section.

The mounting element can be mounted to the car interface section by a positioning bolt which extends through the positioning through hole of the car interface section into the positioning threaded hole. It is further possible to arrange a washer and/or an adjustment element between the bolt head of the positioning bolt and the positioning through hole of the car interface section.

The proposed car interface section of the rail vehicle advantageously allows a simple and precise mounting of a gangway interface section to the car interface section in a desired relative position, in particular by means of at least one fixation bolt, as the mounting element can be mounted to the car interface section such that the desired relative mounting position of the gangway interface section is provided. This and corresponding advantages have been explained before.

Further proposed is an assembly of a gangway interface section of a rail vehicle and a car interface section of the rail vehicle according to the invention.

A mounting section of the gangway interface section has or provides at least one fixation through hole. This has been explained before. Further, the gangway interface section is mounted to the car interface section by means of at least one fixation bolt, wherein the at least one fixation bolt extends through the fixation through hole of the gangway interface section, the at least one fixation through hole of the car interface section into the at least one fixation threaded hole of the mounting element. A fixation bolt can e.g. be provided by a M8 cap head screw.

The gangway interface section can thus be mounted to the car interface section by a fixation bolt which extends through the fixation through hole of the gangway interface section, the fixation through hole of the car interface section into the fixation threaded-hole. It is further possible to arrange a washer between the bolt head of the fixation bolt and the fixation through hole of the gangway interface section.

In the proposed assembly, the gangway interface section can be precisely mounted to the car interface section in a desired relative position, in particular by means of at least one fixation bolt as the mounting element which provides the fixation thread hole is mounted to the car interface section such that the desired relative mounting position for the gangway interface section is provided. This and corresponding advantages have been explained before.

In another embodiment, at least one positioning bolt extends through a positioning through hole of the gangway interface section, the at least one positioning through hole of the car interface section into the at least one positioning threaded hole of the mounting element. A washer and/or the described adjustment element can be arranged between the bolt head of the positioning bolt and the positioning through hole of the car interface section. As explained before, this advantageously allows a coarse adjustment of the relative position between car interface section and gangway interface section which, in turn, simplifies the mounting process.

Further proposed is a method of mounting a gangway interface section of a rail vehicle and a car interface section of the rail vehicle. The method comprises the steps of
- positioning a mounting element according to the invention in a gangway mounting position on the car interface section,
- mounting the mounting element to the car interface section by means of at least one positioning bolt, wherein the positioning bolt is arranged such that it extends through a positioning through hole of the car interface section into the at least one positioning threaded-hole of the mounting element,
- arranging the gangway interface section such that a fixation through hole of the gangway interface section is at least partially aligned with the at least one fixation through hole of the car interface section and the at least one fixation threaded hole of the mounting element,
- mounting the gangway interface section to the car interface section by means of at least one fixation bolt, wherein the fixation bolt is arranged such that it extends through the fixation through hole of the gangway interface section, the fixation through hole of the car interface section into the at least one fixation threaded hole of the mounting element.

Within the step of positioning the mounting element relative to the car interface section, the mounting position can be chosen such that the fixation thread hole of the mounting element is positioned in a gangway mounting position. In the gangway mounting position of the mounting element, the gangway interface section can be mounted to the car interface section using the mounting element in a desired relative position, e.g. with no or only small height level differences between floor sections of the car body and the gangway. The gangway mounting position of the mounting element, in particular of the fixation thread hole, relative to the car interface section can e.g. be determined by measurement.

The proposed method advantageously allows a simple but precise mounting of the gangway interface section to the car interface section.

In another embodiment, the step of aligning the gangway interface section comprises the step of arranging the gangway interface section such that at least a portion of the at least one positioning bolt, in particular an adjustment element of/attached to the positioning bolt, extends through at least one positioning through hole of the gangway interface section. This can also be referred to as coarse positioning of the gangway interface section. After coarse positioning has been performed, e.g. if the at least one positioning bolt extends through at least one positioning through hole of the gangway interface section, a fine positioning can be performed in order to align the fixation through hole of the gangway interface section with the fixation threaded hole of the mounting element such that the gangway interface section can be mounted to the car interface section in a desired relative position by means of the fixation bolt. This further simplifies the mounting process.

The invention will be described with reference to the attached figures. The figures show:
- Fig. 1: an isometric view of a mounting element,
- Fig. 2: a top view of the mounting element shown in Fig. 1,
- Fig. 3: a side view of the mounting element shown in Fig. 1,
- Fig. 4: a schematic cross section through an assembly of a car interface section and a gangway interface section,
- Fig. 5: an isometric view of an adjustment element,
- Fig. 6: a cross section through a car interface section.

In the following, the same reference numerals denote the same or similar technical features.

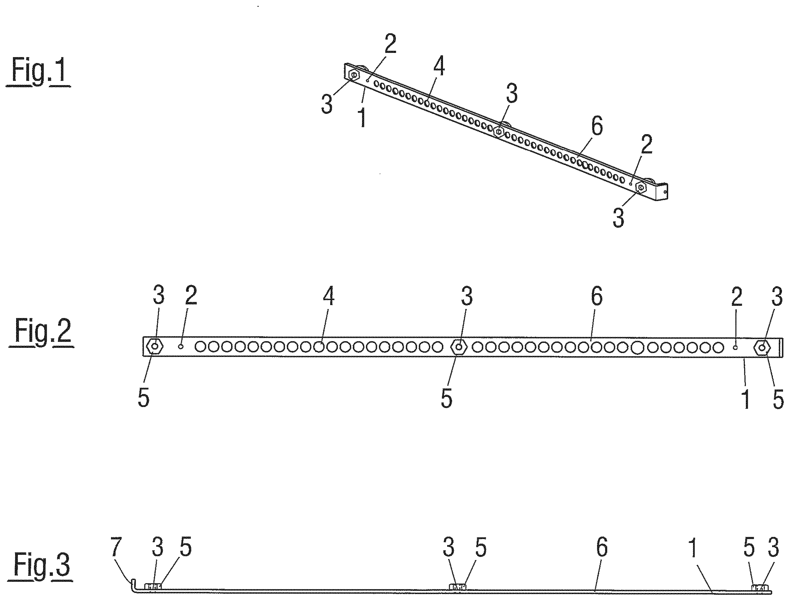

Fig. 1 shows an isometric view of a tapping bar 1 which provides an exemplary mounting Element according to the invention. The tapping bar 1 has two positioning thread holes 2 which each provide a M5 thread.

Further, the tapping bar 1 has three fixation thread holes 3 which each provide a M8 thread. The fixation thread holes 3 and the positioning thread holes 2 are arranged along a common straight line. Further shown are through holes 4 of the tapping bar 1 by which a weight of the tapping bar 1 is reduced. For reasons of clarity, only one through hole 4 is referenced with a reference numeral. The tapping bar 1 can have length of 969 mm and a width of 30 mm and can be made of steel. A thickness of a body portion 6 of the tapping bar 1 can e.g. be 4 mm.

Fig. 2 shows a top view of the tapping bar 1 shown in Fig. 1. It is shown that the fixation thread holes 3 are provided by a thread element 5. The thread element 5 is a hexagonal element. Other geometric shapes of the thread element 5 are, of course, possible. The body portion 6 of the tapping bar 1 can have through holes for receiving the thread elements 5. The thread elements 5 can be arranged in said through holes and welded to the body portion 6.

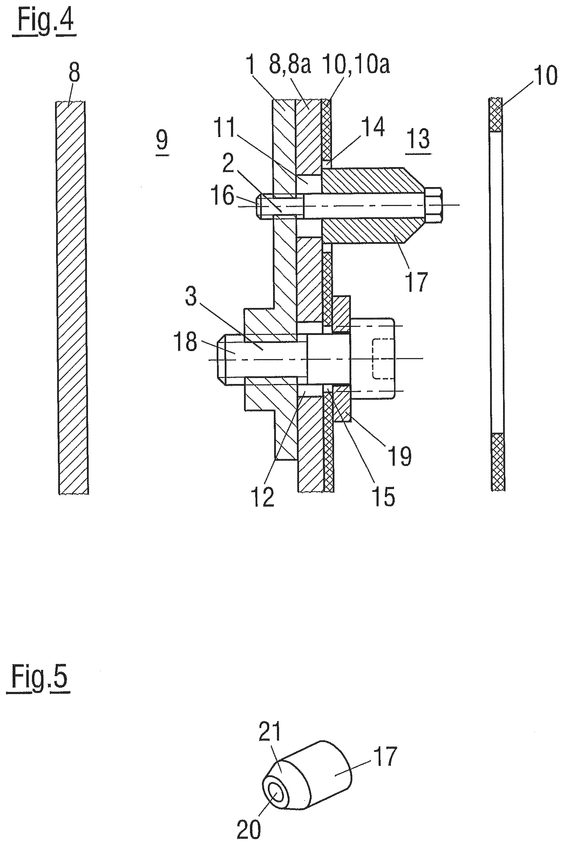

Fig. 3 shows a side view of the tapping bar 1 shown in Fig. 1. It is shown that a thickness of the thread elements 5 is larger than a thickness of the body portion 6 of the tapping bar 1. Further shown is that a free end of the tapping bar 1 provides a curved section 7. This curved section 7 allows a handling, e.g. a positioning, of the tapping bar 1, e.g. in a hollow space 9 of a car interface section 8 (see Fig. 4).

Fig. 4 shows a schematic cross section through an assembly of a car interface section 8 and a gangway interface section 10. Shown is a hollow space 9 of the car interface section 8. Further shown is a mounting plate 8a of the car interface section 8 which provides a mounting section of the car interface section 8. An outer, front surface provides a mounting surface for mounting the gangway interface section 10 and an inner, rear surface provides a mounting surface for mounting a tapping bar 1.

The tapping bar 1 is arranged in the hollow space 9 of the car interface section 8. Further, the car interface section 8, in particular the mounting plate 8a, has a positioning through hole 11 and a fixation through hole 12.

Further shown is the gangway interface section 10 which also has a hollow space 13. Further shown is a mounting plate 10a of the gangway interface section 10 which provides a mounting section of the gangway interface section 10. An outer, front surface provides a mounting surface for mounting the gangway interface section 10 to the car interface section 8. In the mounted state, the mounting surfaces of the mounting plates 8a, 10a abut. Further, the gangway interface section 10, in particular the mounting plate 10a, has a positioning through hole 14 and a fixation through hole 15.

A method for mounting the gangway interface section 10 to the car interface section 8 will be explained with reference to Fig. 4. First, the tapping bar 1 is fixed to the mounting plate 8a by means of a positioning bolt 16 which extends through the positioning through hole 11 of the mounting plate 8a into the positioning thread hole 2 of the tapping bar 1. The diameter of the positioning through hole 11 of the mounting plate 8a is larger than a diameter of the positioning bolt 16. Thus, the position in which the tapping bar 1 will be fixed to the mounting plate 8a can be varied in a predetermined positioning interval. In particular, the position of the tapping bar 1 relative to the car interface section 1 is adjusted such that the fixation thread hole 3 of the tapping bar 1 is in a gangway mounting position. In the gangway mounting position, the gangway interface section 10 can be mounted to the car interface section 8 by means of the fixation thread hole 3 such that a desired relative position between gangway interface section 10 and car interface section 8 is provided.

An adjustment element 17 is attached to the positioning bolt 16. In particular, the adjustment element 17 is arranged at the bolt head end of the positioning bolt 16. A maximal diameter of the adjustment element 17 is larger than the diameter of the positioning through hole 11 of the car interface section 8. Thus, the mounting plate 8a is jammed between the tapping bar 1 and the adjustment element 17. Further shown is that the adjustment element 16 extends away from the outer surface of the mounting plate 8a.

The mounting plate 10a of the gangway interface section 10 has a positioning through hole 14, wherein a diameter of said positioning through hole 14 is larger than the maximal diameter of the adjustment element 17. For a coarse adjustment of the relative position between the car interface section 8 and the gangway interface section 10, it is possible to plug the gangway interface section onto the positioning bolt 16 with the adjustment element 17, in particular such that the adjustment element 17 extends through the positioning through hole 14 of the gangway interface section 10. Thus, the adjustment element 17 serves as a guide pin for the gangway interface section 10. It can be seen that in this case, the fixation through hole 15 of the gangway interface section 10 is brought into a coarse alignment with the fixation through hole 12 of the car interface section 8 and the fixation threaded hole 3. In this coarsely adjusted relative position, the adjustment element extends into the hollow space 13 of the gangway interface section 10.

Starting from the coarsely adjusted relative position, the gangway interface section 10 is then fine positioned such that the fixation through hole 15 of the gangway interface section 10 aligns at least partially, preferably fully, with the fixation through hole 12 of the car interface section 8 and the fixation threaded hole 3. Then, a fixation bolt 18 is inserted through the fixation through hole 15 of the gangway interface section 10, the fixation through hole 12 of the car interface section 8 and into the fixation threaded hole 3. It is shown that a diameter of the fixation through hole 15 of the gangway interface section 10 is larger than the diameter of the fixation through hole 12 of the car interface section 8. Further shown is a further washer 19 which is arranged between the bolt head of the fixation bolt 18 and the rear surface of the mounting plate 10a of the gangway interface section 10. The diameter of the further washer 19 is larger than the diameter of the fixation through hole 15 of the gangway interface section 10. By inserting the fixation bolt 18 into the fixation threaded hole 3, the gangway interface section is mounted to the car interface section 8.

Because the tapping bar 1 with the fixation threaded hole 3 is in the gangway mounting position, the gangway interface section 10 will be in a desired position relative to the car interface section 8. In this desired relative position, floor sections (not shown) of a gangway section and a car body will be aligned, e.g. flush.

In summary, a precise and simple mounting of the gangway interface section to the car interface section is provided.

Fig. 4 shows that the gangway interface section 10, in particular an inner side wall of the positioning through hole 14 of the gangway interface section 10, does not rest on an outer surface of the adjustment element 17. It is, however, possible that the gangway interface section 10, in particular an inner side wall of the positioning through hole 14 of the gangway interface section 10, rests on the outer surface of the adjustment element 17 when mounted to the car interface section 8.

Fig. 5 shows an isometric view of an adjustment element 17. The adjustment element 17 has a through hole 20 for receiving the positioning bolt 16 (see Fig. 4). Further, the adjustment element 17 has a tapered end section in which a diameter of the adjustment element 17 decreases towards the free end of the adjustment element 17. A length of the adjustment element 17 can be equal to or larger than a maximal diameter of the adjustment element 17. In particular, the length can be equal to 30 mm.

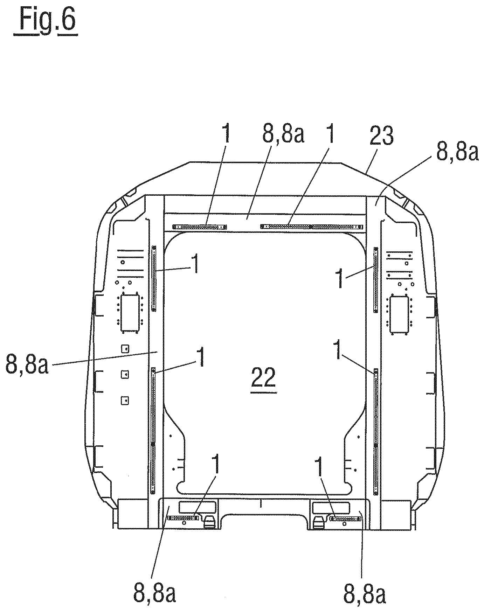

Fig. 6 shows a cross section through a car interface section 8. Shown is a passage 22 for passing from a car body 23 into a gangway section (not shown) and vice versa. The passage 22 is surrounded by mounting plates 8a, wherein rear surfaces of the mounting plates 8a are shown. Tapping bars 1 are mounted to the mounting plates 8a as shown in Fig. 4. In the shown embodiment, two tapping bars 1 are mounted to above the passage 22, two tapping bars 1 are mounted below the passage 22 and two tapping bars 1 on each lateral side of the passage 22. As explained before, a gangway interface section 10 (see Fig. 4) can now be mounted to the car interface section 8 by means of the tapping bars 1.

## Claims

1. A mounting element for mounting a gangway interface section (10) of a rail vehicle to a car interface section (8) of the rail vehicle, wherein the mounting element comprises at least one positioning thread hole (2) and at least one fixation thread hole (3),
wherein the mounting element comprises a positioning bolt (16) and an adjustment element (17), wherein adjustment element (17) is arranged between the bolt head of the positioning bolt (16) and a free end of the positioning bolt (16), **characterized in that** the positioning bolt (16) extends into the positioning thread hole (2).

2. The mounting element according to claim 1, **characterized in that** the mounting element is a bar element (1).

3. The mounting element according to one of the preceding claims, **characterized in that** the mounting element comprises a first set of at least two positioning thread holes (2) and a second set of at least two fixation thread holes (3).

4. The mounting element according to one of the preceding claims, **characterized in that** the mounting element comprises at least one recess.

5. The mounting element according to one of the preceding claims, **characterized in that** a thread diameter of the at least one fixation thread hole (3) is larger than a thread diameter of the at least one positioning thread hole (2).

6. The mounting element according to one of the preceding claims, **characterized in that** a thickness of the mounting element in a section comprising a fixation thread hole (3) is larger than a thickness in a section comprising a positioning thread hole (2).

7. The mounting element according to one of the preceding claims, **characterized in that** the fixation thread hole (3) is provided by a reinforced section of the mounting element.

8. The mounting element according to one of the preceding claims, **characterized in that** at least a portion of the adjustment element (17) is conically shaped.

9. The mounting element according to one of the preceding claims, **characterized in that** the positioning bolt (16) extends through the adjustment element (17).

10. The mounting element according to one of the preceding claims, **characterized in that** at least one free end of the mounting element is curved.

11. A car interface section of a rail vehicle, wherein a mounting section of the car interface section (8) for mounting a gangway interface section (10) of the rail vehicle has at least a positioning through hole (11) and at least one fixation through hole (12), wherein the car interface section (8) comprises at least one mounting element according to one of the claims 1 to 10, wherein the mounting element is mounted to the car interface section (8) such that the at least one positioning threaded hole (2) of the mounting element is at least partially aligned with the at least one positioning through hole (11) of the car interface section (8) and such that the at least one fixation threaded hole (3) of the mounting element is at least partially aligned with the at least one fixation through hole (12) of the car interface section (8).

12. An assembly of a gangway interface section (10) of a rail vehicle and a car interface section (8) of the rail vehicle according to claim 11, wherein a mounting section of the gangway interface section (10) has at least one fixation through hole (15), wherein the gangway interface section (10) is mounted to the car interface section (8) by means of at least one fixation bolt (18), wherein the at least one fixation bolt (18) extends through the fixation through hole (115) of the gangway interface section (10), the at least one fixation through hole (12) of the car interface section (8) into the at least one fixation threaded hole (13) of the mounting element.

13. The assembly according to claim 12, **characterized in that** at least one positioning bolt (16) extends through a positioning through hole (14) of the gangway interface section (10), the at least one positioning through hole (11) of the car interface section (8) into the at least one positioning threaded hole (2) of the mounting element.

14. A method of mounting a gangway interface section (10) of a rail vehicle to a car interface section (8) of the rail vehicle, wherein the method comprises the steps of
- positioning a mounting element according to one of the claims 1 to 10 in a gangway mounting position on the car interface section (8),
- mounting the mounting element to the car interface section (8) by means of at least one positioning bolt (16), wherein the positioning bolt (16) is arranged such that it extends through a positioning through hole (11) of the car interface section (8) into the at least one positioning threaded-hole (2) of the mounting element,
- arranging the gangway interface section (10) such that a fixation through hole (15) of the gangway interface section (10) is at least partially aligned with the at least one fixation through hole (12) of the car interface section (8) and the at least one fixation threaded-hole (3) of the mounting element,
- mounting the gangway interface section (10) to the car interface section (8) by means of at least one fixation bolt (18), wherein the fixation bolt (18) is arranged such that it extends through the fixation through hole (15) of the gangway interface section (10), the fixation through hole (12) of the car interface section (8) into the at least one fixation threaded-hole (3) of the mounting element.

15. The method according to claim 14, **characterized in that** aligning the gangway interface section (10) comprises the step of arranging the gangway interface section (10) such that at least a portion of the at least one positioning bolt (16) extends through at least one positioning through hole (14) of the gangway interface section (10).

## Patentansprüche

1. Montageelement zum Montieren eines Übergang-Verbindungsabschnitts (10) eines Schienenfahrzeugs an einem Wagen-Verbindungsabschnitt (8) des Schienenfahrzeugs, wobei das Montageelement mindestens eine Positioniergewindebohrung (2) und mindestens eine Fixiergewindebohrung (3) umfasst, wobei das Montageelement einen Positionierbolzen (16) und ein Justierelement (17) umfasst, wobei das Justierelement (17) zwischen dem Bolzenkopf des Positionierbolzens (16) und einem freien Ende des Positionierbolzens (16) angeordnet ist,
**dadurch gekennzeichnet, dass**
sich der Positionierbolzen (16) in die Positioniergewindebohrung (2) erstreckt.

2. Montageelement nach Anspruch 1, **dadurch**
**gekennzeichnet, dass** das Montageelement ein Stabelement (1) ist.

3. Montageelement nach einem der vorangehenden Ansprüche, **dadurch gekennzeichnet, dass** das Montageelement eine erste Menge aus mindestens zwei Positioniergewindebohrungen (2) und eine zweite Menge aus mindestens zwei Fixiergewindebohrungen (3) umfasst.

4. Montageelement nach einem der vorangehenden Ansprüche, **dadurch gekennzeichnet, dass** das Montageelement mindestens eine Aussparung aufweist.

5. Montageelement nach einem der vorangegangenen Ansprüche, **dadurch gekennzeichnet, dass** ein Gewindedurchmesser der mindestens einen Fixiergewindebohrung (3) größer ist als ein Gewindedurchmesser der mindestens einen Positioniergewindebohrung (2).

6. Montageelement nach einem der vorangehenden Ansprüche, **dadurch gekennzeichnet, dass** eine Dicke des Montageelements in einem Abschnitt, der eine Fixiergewindebohrung (3) umfasst, größer ist als eine Dicke in einem Abschnitt, der eine Positioniergewindebohrung (2) umfasst.

7. Montageelement nach einem der vorangegangenen Ansprüche, **dadurch gekennzeichnet, dass** die Fixiergewindebohrung (3) von einem verstärkten Abschnitt des Montageelements bereitgestellt wird.

8. Montageelement nach einem der vorangegangenen Ansprüche, **dadurch gekennzeichnet, dass** zumindest ein Abschnitt des Justierelements (17) konisch geformt ist.

9. Montageelement nach einem der vorangegangenen Ansprüche, **dadurch gekennzeichnet, dass** sich der Positionierbolzen (16) durch das Justierelement (17) hindurch erstreckt.

10. Montageelement nach einem der vorangehenden Ansprüche, **dadurch gekennzeichnet, dass** mindestens ein freies Ende des Montageelements gekrümmt ist.

11. Wagenverbindungsabschnitt eines Schienenfahrzeugs, wobei ein Montageabschnitt des Wagenverbindungsabschnitts (8) zum Montieren eines Übergang-Verbindungsabschnitts (10) des Schienenfahrzeugs zumindest eine Positionierdurchgangsbohrung (11) und mindestens eine Fixiergewindebohrung (12) aufweist, wobei der Wagenverbindungsabschnitt (8) mindestens ein Montageelement nach einem der Ansprüche 1 bis 10 umfasst, wobei das Montageelement so an dem Wagenverbindungsabschnitt (8) montiert ist, dass die mindestens eine Positioniergewindebohrung (2) des Montageelements zumindest teilweise an der mindestens einen Positionierdurchgangsbohrung (11) des Wagenverbindungsabschnitts (8) ausgerichtet ist, und so, dass die mindestens eine Fixiergewindebohrung (3) des Montageelements zumindest teilweise an der mindestens einen Fixierdurchgangsbohrung (12) des Wagen-Verbindungsabschnitts (8) ausgerichtet ist.

12. Baugruppe aus einem Übergang-Verbindungsabschnitt (10) eines Schienenfahrzeugs und einem Wagen-Verbindungsabschnitt (8) des Schienenfahrzeugs nach Anspruch 11, wobei ein Montageabschnitt des Übergang-Verbindungsabschnitts (10) mindestens eine Fixierdurchgangsbohrung (15) aufweist, wobei der Übergang-Verbindungsabschnitt (10) mittels mindestens eines Fixierbolzens (18) an dem Wagen-Verbindungsabschnitt (8) montiert ist, wobei sich der mindestens eine Fixierbolzen (18) durch die Fixierdurchgangsbohrung (15) des Übergang-Verbindungsabschnitts (10), die mindestens eine Fixierdurchgangsbohrung (12) des Wagen-Verbindungsabschnitts (8) in die mindestens eine Fixiergewindebohrung (13) des Montageelements hinein erstreckt.

13. Baugruppe nach Anspruch 12, **dadurch gekennzeichnet, dass** sich mindestens ein Positionierbolzen (16) durch eine Positionierdurchgangsbohrung (14) des Übergang-Verbindungsabschnitts (10), die mindestens eine Positionierdurchgangsbohrung (11) des Wagen-Verbindungsabschnitts (8) in die mindestens eine Positioniergewindebohrung (2) des Montageelements hinein erstreckt.

14. Verfahren zum Montieren eines Übergang-Verbindungsabschnitts (10) eines Schienenfahrzeugs an einem Wagen-Verbindungsabschnitt (8) des Schienenfahrzeugs, wobei das Verfahren die folgenden Schritte umfasst:
- Positionieren eines Montageelements nach einem der Ansprüche 1 bis 10 in einer Übergang-Montageposition an dem Wagen-Verbindungsabschnitt (8),
- Montieren des Montageelements an dem Wagen-Verbindungsabschnitt (8) mittels mindestens eines Positionierbolzens (16), wobei der Positionierbolzen (16) so angeordnet wird, dass er sich durch eine Positionierdurchgangsbohrung (11) des Wagen-Verbindungsabschnitts (8) in die mindestens eine Positioniergewindebohrung (2) des Montageelements hinein erstreckt,
- Anordnen des Übergang-Verbindungsabschnitts (10) so, dass eine Fixierdurchgangsbohrung (15) des Übergang-Verbindungsabschnitts (10) zumindest teilweise an der mindestens einen Fixierdurchgangsbohrung (12) des Wagen-Verbindungsabschnitts (8) und der mindestens einen Fixiergewindebohrung (3) des Montageelements ausgerichtet ist,
- Montieren des Übergang-Verbindungsabschnitts (10) an dem Wagen-Verbindungsabschnitt (8) mittels mindestens eines Fixierbolzens (18), wobei der Fixierbolzen (18) so angeordnet wird, dass er sich durch die Fixierdurchgangsbohrung (15) des Übergang-Verbindungsabschnitts (10), die Fixierdurchgangsbohrung (12) des Wagen-Verbindungsabschnitts (8) in die mindestens eine Fixiergewindebohrung (3) des Montageelements hinein erstreckt.

15. Verfahren nach Anspruch 14, **dadurch gekennzeichnet, dass** das Ausrichten des Übergang-Verbindungsabschnitts (10) den Schritt des Anordnens des Übergang-Verbindungsabschnitts (10) auf solche Weise umfasst, dass sich zumindest ein Abschnitt des mindestens einen Positionierbolzens (16) durch mindestens eine Positionierdurchgangsbohrung (14) des Übergang-Verbindungsabschnitts (10) hindurch erstreckt.

## Revendications

1. Un élément de montage pour monter une section d'interface d'allée (10) d'un véhicule ferroviaire à une section d'interface de voiture (8) du véhicule ferroviaire, dans lequel l'élément de montage comprend au moins un trou fileté de positionnement (2) et au moins un trou fileté de fixation (3), dans lequel l'élément de montage comprend un boulon de positionnement (16) et un élément de réglage (17), dans lequel l'élément de réglage (17) est disposé entre la tête du boulon de positionnement (16) et une extrémité libre du boulon de positionnement (16) **caractérisé par le fait que** le boulon de positionnement (16) s'étend dans le trou fileté de positionnement (2).

2. L'élément de montage selon la revendication 1, **caractérisé par le fait que** l'élément de montage est un élément de barre (1).

3. L'élément de montage selon l'une des revendications précédentes, **caractérisé par le fait que** l'élément de montage comprend une première série d'au moins deux trous filetés de positionnement (2) et une deuxième série d'au moins deux trous filetés de fixation (3).

4. L'élément de montage selon l'une des revendications précédentes, **caractérisé par le fait que** l'élément de montage comprend au moins une cavité.

5. L'élément de montage selon l'une des revendications précédentes, **caractérisé par le fait qu'**un diamètre de filetage du au moins un trou fileté de fixation (3) est supérieur à un diamètre de filetage du au moins un trou fileté de positionnement (2).

6. L'élément de montage selon l'une des revendications précédentes, **caractérisé en ce qu'**une épaisseur de l'élément de montage dans une section comprenant un trou fileté de fixation (3) est plus grande qu'une épaisseur dans une section comprenant un trou fileté de positionnement (2).

7. L'élément de montage selon l'une des revendications précédentes, **caractérisé en ce que** le trou fileté de fixation (3) est fourni par une section renforcée de l'élément de montage.

8. L'élément de montage selon l'une des revendications précédentes, **caractérisé en ce qu'**au moins une partie de l'élément d'ajustement (17) est de forme conique.

9. L'élément de montage selon l'une des revendications précédentes, **caractérisé par le fait que** le boulon de positionnement (16) s'étend à travers l'élément de réglage (17).

10. L'élément de montage selon l'une des revendications précédentes, **caractérisé en ce que** au moins une extrémité libre de l'élément de montage est incurvée.

11. Section d'interface de voiture d'un véhicule ferroviaire, dans laquelle une section de montage de la section d'interface de voiture (8) pour le montage d'une section d'interface d'allée (10) du véhicule ferroviaire a au moins un trou de passage de positionnement (11) et au moins un trou de passage de fixation (12), dans laquelle la section d'interface de voiture (8) comprend au moins un élément de montage selon l'une des revendications 1 à 10, dans laquelle l'élément de montage est monté sur la section d'interface de voiture (8) de telle sorte que l'au moins un trou fileté de positionnement (2) de l'élément de montage est au moins partiellement aligné avec l'au moins un trou des passage de positionnement (11) de la section d'interface de voiture (8) et de telle sorte que l'au moins un trou fileté de fixation (3) de l'élément de montage est au moins partiellement aligné avec l'au moins un trou des passage de fixation (12) de la section d'interface de voiture (8).

12. Assemblage d'une section d'interface d'allée (10) d'un véhicule ferroviaire et d'une section d'interface de voiture (8) du véhicule ferroviaire selon la revendication 11, dans lequel une section de montage de la section d'interface d'allée (10) a au moins un trou de passage de fixation (15), dans lequel la section d'interface d'allée (10) est montée à la section d'interface de voiture (8) au moyen d'au moins un boulon de fixation (18), dans lequel l'au moins un boulon de fixation (18) s'étend à travers le trou de passage de fixation (15) de la section d'interface de l'allée (10), l'au moins un trou de passage de fixation (12) de la section d'interface de la voiture (8) dans l'au moins un trou fileté de fixation (13) de l'élément de montage.

13. L'assemblage selon la revendication 12, **caractérisé par le fait qu'**au moins un boulon de positionnement (16) s'étend à travers un trou de passage de positionnement (14) de la section d'interface de l'allée (10), le trou de passage de positionnement (11) de la section d'interface de la voiture (8) dans l'au moins un trou fileté de positionnement (2) de l'élément de montage.

14. Méthode de montage d'une section d'interface d'allée (10) d'un véhicule ferroviaire sur une section d'interface de voiture (8) du véhicule ferroviaire, dans laquelle la méthode comprend les étapes suivantes
- positionner un élément de montage selon l'une des revendications 1 à 10 dans une position de montage de l'allée sur la section d'interface de voiture (8),
- fixer l'élément de montage à la section d'interface de voiture (8) au moyen d'au moins un boulon de positionnement (16), le boulon de positionnement (16) étant disposé de manière à traverser un trou de passage de positionnement (11) de la section d'interface de voiture (8) et à pénétrer dans au moins un trou fileté de positionnement (2) de l'élément de montage,
- la section d'interface de l'allée (10) est disposée de telle sorte qu'un trou de passage de fixation (15) de la section d'interface de l'allée (10) est au moins partiellement aligné avec au moins un trou de passage de fixation (12) de la section d'interface de la voiture (8) et au moins un trou fileté de fixation (3) de l'élément de montage,
- fixer la section d'interface de l'allée (10) à la section d'interface de la voiture (8) au moyen d'au moins un boulon de fixation (18), le boulon de fixation (18) étant disposé de manière à traverser le trou de passage de fixation (15) de la section d'interface de l'allée (10), le trou de passage de fixation (12) de la section d'interface de la voiture (8) dans l'au moins un trou fileté de fixation (3) de l'élément de montage.

15. Procédé selon la revendication 14, **caractérisé par le fait que** l'alignement de la section (10) de l'interface de l'allée comprend l'étape consistant à disposer la section (10) de l'interface de l'allée de telle sorte que au moins une partie de l'au moins un boulon de positionnement (16) s'étende à travers au moins un trou de passage de positionnement (14) de la section de l'interface de l'allée (10).
